# EUROPEAN PATENT SPECIFICATION

(11) **EP 1 542 394 B1**
(45) Date of publication and mention of the grant of the patent: **17.06.2009**
(21) Application number: 04300863.0
(22) Date of filing: 09.12.2004
(51) Int. Cl.: H04L 12/18, H04L 12/14, H04L 12/24

(54) **Multicast flow accounting**
Abrechnung des Multicastflusses
Comptabilité de flux multidiffusés

(30) Priority: 11.12.2003 US 732529
(43) Date of publication of application: 15.06.2005
(73) Proprietor: Alcatel Lucent, 75008 Paris (FR)
(72) Inventor: GUINGO, Pierrick, K2H 9K4, Ottawa (CA); CORNET, Jerome, K1N 8W8, Ottawa (CA); JANSEN, Arnold, Manotick K4M 1J8 Ontario (CA); CUERVO, Fernando, K0A 1T0, Ottawa (CA)
(74) Representative: Nicolle, Olivier

(56) References cited:
- EP-A- 1 341 341
- US-B1- 6 269 085

## Description

### Field of the invention

The invention relates to communications, and in particular to providing flow accounting in support of multicast and broadcast service provisioning.

### Background of the invention

In the field of packet-switched communications, broadcast content transport using multicast techniques such as the multicast data transmission disclosed in document US 6 269 085, provides opportunities for delivery of continuous multimedia streams such as, but not limited to: audio (e.g. net radio services), video (e.g. web conferencing), data (e.g. ticker tape), etc., from a source communications network node broadcasting content to a group of receivers such as multiple destination communications network nodes, far more effectively than currently employed unicast technologies.

While broadcast content transport using multicast techniques is a promising developing technology for dissemination of multimedia content across a communication network, there is a need for further development in the area of per-usage accounting.

Multicast transport protocols have been under research and employed in broadcasting content across communication networks for some years now, however satisfactory and effective methods for multicast flow accounting are still being sought to measure resource utilization.

Current proposals have centered on billing models: sender-based versus receiver-based; and on pricing models: flat-rate versus usage-based, rather than on a technology enabling multicast flow accounting.

Content multicasting via packet-switched communications networks enables the transmission of a single packet from a source to multiple destinations by replicating the packet at multicast-enabled routers in the communications network until copies of the packet reach all destinations. Broadcast content subscribers, at the multiple destinations, register into specific multicast groups and request content. In registering a new broadcast content subscriber into a specific multicast group, an upstream multicast-enabled router conveying the broadcast content sought, adds the network address of the broadcast content subscriber's destination to a corresponding multicast group list managed by the multicast enabled router. This makes it difficult to evaluate the cost of transport of a multicast packet across the communications network and to set up a sender-based billing because none of the multicast-enabled routers upstream from the multicast-enabled router which performed the registration are aware of all downstream distribution paths of the multicast flow which may change as subscribers dynamically join and leave multicast groups.

Currently there is no prior art solution that effectively addresses these issues.

Per flow resource utilization measurement methods have been actively developed providing fine grained measurement of unicast traffic conveyed in a communications network, but no multicast-specific application has been created using this technology.

There therefore is a need to solve the above mentioned issues.

### Summary of the Invention

In accordance with an aspect of the invention, it is provided a method of deriving resource utilization information regarding a multicast flow at a multicast-enabled router participating in a multicast tree according to claim 1.

In accordance with another aspect of the invention, the method includes correlating the topology information to the traffic flow measurement information.

In accordance with a further aspect of the invention, a resource utilization update request is forwarded in respect of each triggering event via interfaces associated with dependent sub-tree portions.

In accordance with a further aspect of the invention, resource utilization reports are received via interfaces corresponding to dependent sub-tree portions.

In accordance with a further aspect of the invention, topology information and traffic flow measurement information is stored in storage associated with the router along with a time stamp enabling historical tracking of resource utilization information.

In accordance with a further aspect of the invention, the method includes determining that multicast flow content is being forwarded via a local access link associated with a destination content consumer node. The router asserts itself as an egress router in respect of an interface corresponding to the local access link. And, obtains traffic flow measurements in respect of content conveyed via the interface.

In accordance with a further aspect of the invention, obtaining traffic flow measurements is performed in response to a triggering event.

In accordance with a further aspect of the invention, a time stamp is associated with each traffic flow measurement.

In accordance with a further aspect of the invention, should the router determine that multicast flow content is being received via a local access link associated with a source broadcast content provider node, the router asserts itself as an ingress router in respect of an interface corresponding to the local access link.

In accordance with a further aspect of the invention, in reporting the aggregated topology and traffic flow measurement information upstream, the aggregated topology and traffic flow measurement information is encapsulated into a resource utilization report.

In accordance with a further aspect of the invention, it is provided a multicast-enabled router according to claim 20.

In accordance with a further aspect of the invention, the multicast-enabled router is associated with a local access link conveying content to a destination broadcast content consumer node. The multicast-enabled router further includes a flow measurement module employed in obtaining traffic flow measurements in respect of multicast flow content conveyed to the destination broadcast content consumer node.

In accordance with a further aspect of the invention, in obtaining traffic flow measurements, the flow measurement module further employs a flow measurement means from any of: Real Time Flow Meter (RTFM), Internet Protocol Flow Information eXport (IPFIX), Packet Sampling (PSAMP) and Internet Protocol Performance Measurement (IPPM).

In accordance with a further aspect of the invention, the multicast-enabled router is associated with a local access link receiving content from a source broadcast content provider node. The multicast traffic accounting manager module employs the messaging module to provide correlated resource utilization reports regarding the multicast tree to a management function.

In accordance with a further aspect of the invention, the router further includes a database storing time stamped resource utilization information such as: topology information regarding dependent sub-tree portions, flow measurements regarding dependent sub-tree portions, and correlations therebetween.

In accordance with yet another aspect of the invention, the triggering event includes one of: a multicast channel join request, a multicast channel leave announcement, an announcement of an availability of a periodic traffic measurement, a resource utilization update request, a periodic resource utilization update request, an announcement regarding a multicast tree topology change, a counter rollover, and a change in content characteristics.

Advantages are derived in part from:
- providing event driven communications network resource utilization reporting on a per multicast flow basis including correlated multicast topology information with leaf traffic measurements, the event driven reporting reducing reporting overheads associated wherewith;
- providing decentralized resource utilization report processing eliminating the need for a centralized entity processing resource utilization reports issued by each multicast-enabled router in a communications network;
- the event driven reporting and decentralized resource utilization report processing leading to scalable multicast flow accounting solutions;
- a multicast transport protocol independent implementation;
- customizing the resource utilization information reported provides flexibility in employing a billing model in respect of each individual multicast flow;
- propagating topology information upstream to an ingress router provides support for admission control in policing the number of destination network nodes consuming broadcast content; and
- propagating topology information upstream to the ingress router provides support for multicast traffic engineering.

### Brief description of the drawings

The features and advantages of the invention will become more apparent from the following detailed description of the exemplary embodiments with reference to the attached diagrams wherein:
FIG. 1 is a schematic diagram showing interconnected communications network elements provisioning a broadcast service;
FIG. 2 is a schematic diagram showing, in accordance with the exemplary embodiment of the invention, interconnected communications network elements implementing a generic multicast tree branch point;
FIG. 3 is a schematic diagram showing, in accordance with the exemplary embodiment of the invention, interconnected communications network elements provisioning multicast content transport in respect of an ingress router;
FIG. 4 is a schematic diagram showing, in accordance with the exemplary embodiment of the invention, interconnected communications network elements provisioning multicast content transport in respect of an egress router; and
FIG. 5 is a schematic diagram showing functional blocks of a multicast-enabled router in accordance with the exemplary embodiment of the invention.

It will be noted that in the attached diagrams like features bear similar labels.

### Detailed description of the embodiments

Although the exemplary embodiment of the invention will be presented herein with reference to one-to-many broadcast service provisioning, it is understood that the invention can also be applied, with due changes in implementation, to many-to-many broadcast service provisioning.

Methods of multicast flow accounting are sought wherein multicast traffic measurements are correlated with multicast tree topology information in respect of each monitored multicast flow in a managed domain.

Content transport protocols enabling multicast content distribution are implemented on multicast-enabled routers participating in a communications network. Such a content transport protocol includes, while not limiting the invention to, the Protocol Independent Multicast - Sparse Mode (PIM-SM) initiative by Fenner, B., Handley, M., Holbrook, H. and I. Kouvelas, which is work in progress, with an overview published by the Internet Engineering Task Force (IETF) under Request For Comments (RFC) 3569.

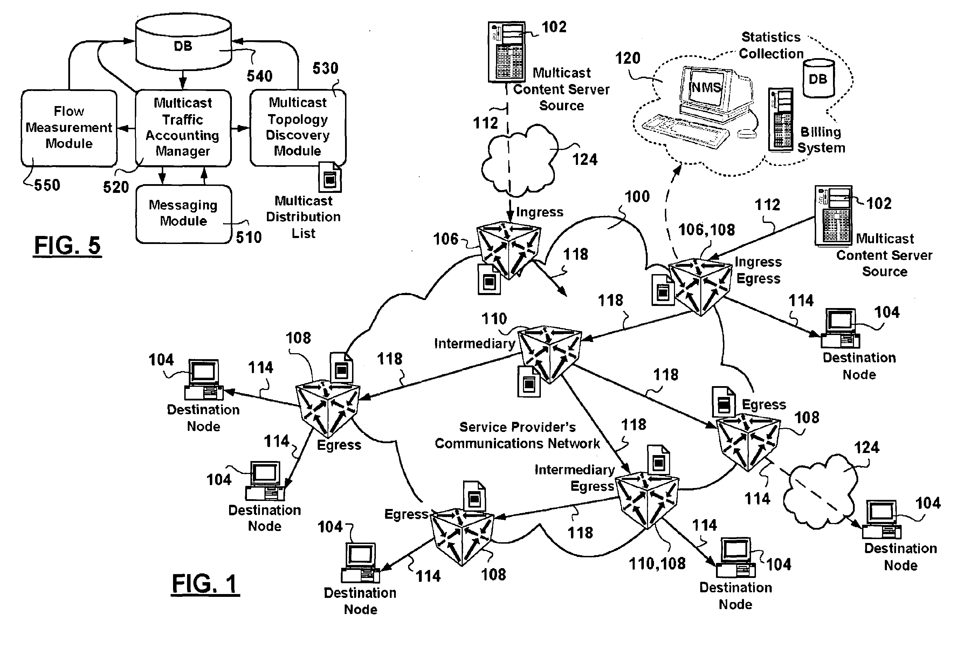

Making reference to FIG. 1, when the managed domain is a managed communications network 100, a customer broadcast content provider source node 102 and customer broadcast content consumer/user destination nodes 104 are considered to lie outside the managed communications network 100, wherein a managed multicast-enabled ingress router 106 is associated with the broadcast content provider node 102 and typically multiple managed multicast-enabled egress routers 108 are associated with multiple broadcast content consumer user nodes 104. Customer destination user nodes 104 are typically connected to edge communications network nodes including multicast-enabled egress router entities 108 either directly via an access link 114 or indirectly via an intermediary communications network 124. In the managed communications network 100, intermediate multicast-enabled routers 110 also participate in broadcast service provisioning, conveying broadcast content between the ingress router 106 and the egress routers 108.

PIM-SM may exemplary be employed by the multicast-enabled routers 106/108/110 in the communications network 100 to determine optimized multicast content distribution paths for a multicast flow within the communications network 100:

A multicast channel is defined by the tuple (S,G), where S is the address of an ingress multicast-enabled router 106 (at the edge) of the communications network 100, and G is a network address (identifier) belonging to a reserved network address space for multicast channel specification. A multicast channel is ascribed to each broadcast service potentially provisioned in the communications network 100.

When a multicast-enabled "child node", such as a destination node 104, an egress router 108 associated with a destination node 104 or an intermediate router 110, wants to join a multicast channel, the child entity 108/110 issues a "join request" towards the ingress router 106 (S) to join the multicast channel. Typically, the join request may directed to a "parent router". The particular parent router replying to the join request is one unicast hop from the child router 108/110 which issued the join request towards the ingress router (S) 106: the first intermediate router 110 in the shortest path towards the ingress router (S) 106, or the ingress router (S) 106 itself. If the parent router 106/110 already participates in the multicast channel, the parent router 106/110 adds an interface identifier of an interface via which the child router 110/108 may be reached (typically the interface via which the join request was received), to a local multicast distribution list maintained by the parent router 106/110; otherwise, the intermediate parent router 110 forwards (broadcasts) the join request along. The join request forwarding process is recursive until an intermediate router 110 participating in the multicast channel is reached, or the ingress router (S) 106 itself is reached. A confirmation of registration with the multicast channel is sent downstream by an upstream parent router 106/110 performing the first registration with the multicast channel. The confirmation recursively causes each child router 110 in the path to the egress router 108, including the egress router 108, to join the multicast channel.

The first destination content consumer node 104 to register with the multicast channel establishes a branchless multicast tree. Subsequent join requests for participation in the multicast channel from additional destination content consumer nodes 104 result in broadcasted join request messages being picked up by intermediary routers 110 already in the multicast tree. Underlying multicast protocol processes therefore cause the establishment of a multicast tree branch grafted to an intermediary router 110 already participating in the multicast channel. Should an intermediary router 110, or communications network infrastructure actively provisioning multicast content transport, fail, the remaining multicast-enabled routers 106/110/108 still registered with the multicast channel, re-compute the multicast tree in accordance with contingency processes of the multicast transport protocol employed.

Each multicast-enabled router 110/108/106 is aware of the multicast channel the router participates in. Each intermediary router 106/110/108, via the forwarded join requests has knowledge of all local interfaces to child routers 110/108 or destination network nodes 104. And, each multicast-enabled router 110/108, via the confirmation of registration with the multicast channel, has knowledge of its next hop parent router 106/110. Each router 106/108/110 participating in a multicast channel maintains a corresponding local distribution list, which is a list of registered interfaces to which incoming packets constituent of a corresponding multicast flow are replicated to.

Persons of ordinary skill in the art understand that the depiction of the exemplary network shown in FIG. 1 is oversimplified. In practice router entities 106/108/110 (either physical or virtual) are associated with communications network nodes having interfaces associated with physical links 118 conveying content to peer communications network nodes and interfaces associated with access links conveying content to 114, and from 112, customers; the communications network customers including: broadcast service providers 102 and broadcast content consumers 104. Therefore, in accordance with the exemplary embodiment of the invention, any particular multicast-enabled router may act concurrently as an intermediate router 110 with respect to a multicast flow, while at the same time may act as an ingress router 106 in respect of another multicast flow, and further as an egress router 108 in respect of yet another multicast flow. In respect of a particular multicast flow, an ingress router 106 may at the same time act as an egress router 108, and an egress router 108 may at the same time act as an intermediary router 110.

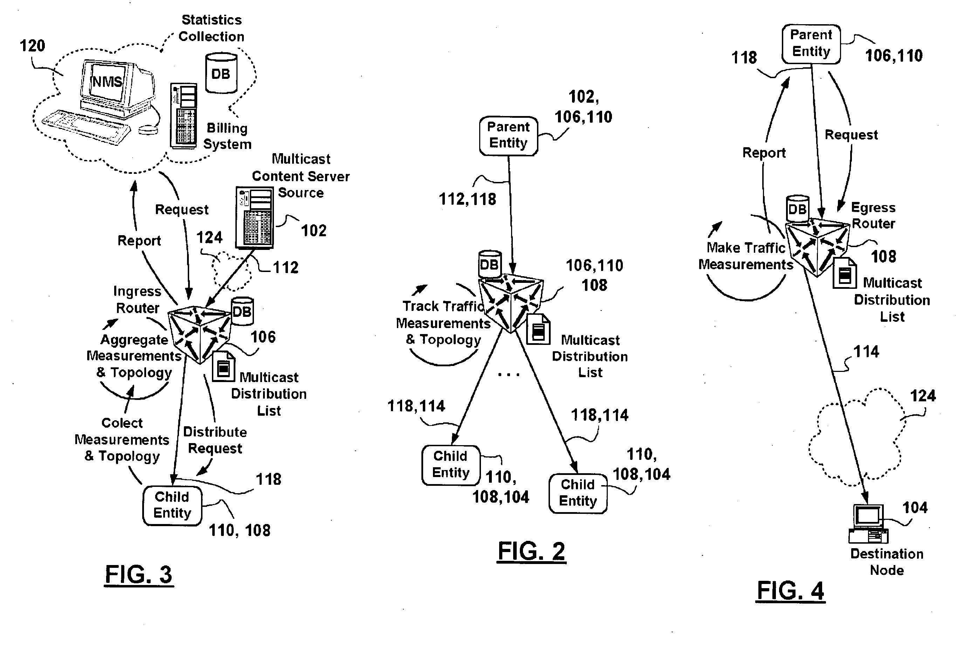

The paths followed by the multicast flow content transported in respect of a provisioned broadcast service form a tree made up of multicast-enabled router entities 106/110/108 at branch points in the multicast tree schematically shown in FIG. 2. Each router entity 106/110/108 branch point in the multicast tree, distributes broadcast content received from a parent entity 102/106/110 to a group of children entities, themselves router entities 110/108 or destination nodes 104, by replicating the received multicast content packets to the multiple interfaces specified in the multicast distribution list.

In accordance with an exemplary embodiment of the invention, a protocol is provided for aggregating and conveying multicast flow measurements generated by egress routers 108 upstream towards the ingress router 106. Multicast tree topology information is appended to multicast flow measurement reports as the multicast flow measurement reports are propagated upstream.

In accordance with the exemplary embodiment of the invention, each multicast-enabled router participating in a multicast group determines whether, the multicast-enabled router is an ingress router 106 in respect of a multicast flow. Making reference to FIG. 3, the multicast-enabled router, either by inspecting headers of packets conveyed therethrough in respect of the multicast flow, or via other means, determines whether its parent entity is associated with, and transmits content from, the other end of an access link 112 to the communications network 100. Included are broadcast content provider nodes 102 directly connected to an access link 112, and broadcast content provider nodes 102 connected to a remote communications network 124 accessible via an access link 112. Having determined that the parent entity 102 in respect of the multicast flow is accessible via an access link 112, the subject multicast-enabled router asserts itself as an ingress router 106 in respect of the multicast flow.

In accordance with the exemplary embodiment of the invention, as an ingress router 106 is responsible for aggregating multicast traffic measurements and associated multicast tree topology information in respect of a multicast flow, and to potentially report correlated information to higher level communication network management and provisioning functions 120 which include, but are not limited to: a network management system, statistics collector, billing platform, etc. Alternatively the ingress router 106 may store historical information regarding the multicast flow for later retrieval.

In accordance with the exemplary embodiment of the invention, each multicast-enabled router participating in a multicast group determines whether, the multicast-enabled router is an egress router 108 in respect of a multicast flow. Making reference to FIG. 4, the multicast-enabled router, either by inspecting headers of packets conveyed therethrough in respect of the multicast flow, or by other means, determines whether one of its registered interfaces in the multicast distribution list corresponding to the multicast flow, is associated with, and conveys content over, an access link 114 to a broadcast content user 104. This includes a broadcast content user nodes 104 directly connected to the access link 14, and broadcast content user nodes 104 connected to a remote communications network 124 accessible via the access link 114. Having determined that one of the child entities in respect of the multicast flow is accessible via an access link 114, the subject multicast-enabled router asserts itself as an egress router 108 in respect of the corresponding interface.

In accordance with the exemplary embodiment of the invention, as an egress router 108 in respect of the registered interface, the multicast-enabled router 108 is responsible for performing multicast traffic measurements in respect of multicast content conveyed to the broadcast content consumer node 104, and further responsible for reporting traffic measurements upstream to its parent entity.

In accordance with the exemplary embodiment of the invention, (referring back to FIG. 2) each multicast-enabled router 106/110/108 registered with a multicast channel, processes resource utilization update requests received from parent entities, and multicast tree topology information and resource utilization information received via interfaces registered in the local multicast distribution list in respect of the monitored multicast flow.

In accordance with the exemplary embodiment of the invention, each intermediary router 110 registered in a multicast group, (see FIG. 3) upon receiving a resource utilization update request in respect of the multicast flow, replicates the request to all interfaces registered in the multicast distribution list. Interfaces associated with broadcast consumer nodes 104, are handled separately as the multicast-enabled router acts as an egress router 108 therefor.

In accordance with the exemplary embodiment of the invention, each multicast-enabled router registered in a multicast group and acting as an egress router 108, in respect of an interface associated with a broadcast consumer node 104 performs traffic measurements regarding content conveyed via the interface in respect of the multicast flow and generates a resource utilization report as shown in FIG. 4.

In accordance with the exemplary embodiment of the invention, each intermediary 110 or egress 108 multicast-enabled router in possession of a resource utilization report regarding content conveyed via an interface registered with the local multicast distribution list, correlates and transmits the resource utilization report and information multicast tree topology information regarding the registered interface to the corresponding parent router 110/106.

Therefore the ingress router 106 is ultimately provided with the topology of the multicast tree along with branch specific resource utilization information. The availability of the combination of topology information and traffic measurements at the ingress router 106 enables multicast flow accounting in support of communications network management functions (120) including, but not limited to: traffic engineering, billing, etc.

In accordance with an exemplary implementation of the invention, the intermediary 110, or egress 106, router may collect resource utilization reports from all interfaces registered in the local multicast distribution list before transmitting the resource utilization information and the multicast tree topology information on to the parent router 110/106.

In accordance with the exemplary embodiment of the invention, resource utilization reports may further be prepared by egress routers 106 in full cognizance of the underlying multicast transport technology employed on an event driven basis.

Resource utilization reports are generated for example, but not limited to: as a new destination broadcast content consumer node 104 joins a multicast channel, as a destination broadcast content consumer node 104 de-registers with a corresponding multicast-enabled egress router 108 thereby leaving the multicast channel, as a multicast session completes, as a counter overflows, as the multicast-enabled routers 106/110/108 re-compute the multicast tree, as multicast flow content characteristics change (such as changes in respect of content stream compression), as other critical events occur, etc. In providing resource utilization reports, the event driven resource utilization report generation reduces reporting bandwidth overheads incurred.

In accordance with the exemplary embodiment of the invention, although a reduction in the reporting bandwidth overhead is sought, resource utilization reports generated based on, but not limited to: multicast tree topology changes and content characteristics changes (such as changes in respect of content stream compression), may be given priority in propagating thereof towards the ingress router 106, as these events directly and immediately impact resource utilization in the communications network 100.

Without limiting the invention, multicast topology and changes in respect of a multicast flow may be gleaned from messages exchanged in respect of multicast transport protocols employed and/or from infrastructure failure alarm messages.

Without limiting the invention thereto, by monitoring messages employed by the multicast transport protocol in provisioning multicast content distribution, the existence of a new multicast flow may be determined in real-time upon receiving a new multicast packet, and conversely the cessation of a multicast flow may be determined by a prolonged absence of packets being conveyed in respect of the multicast flow.

In accordance with another exemplary implementation of the exemplary embodiment of the invention, egress 108 and intermediate 110 routers may cache multicast tree topology and resource utilization report information regarding respective depending multicast tree portions, to further reduce reporting bandwidth overheads. Local storage may be used at the subject network node incurring a storage overhead. However, benefits derived from reporting bandwidth overhead reductions are weighed against having complete accurate and up to date topology and resource utilization information.

In accordance with another exemplary implementation of the exemplary embodiment of the invention, resource utilization update requests are issued periodically by the ingress node 106 in respect of a tracked multicast flow. Responding to periodic resource utilization requests enables tracking of historical multicast flow topology changes, and historical resource utilization in the communications network 100, enabling a better understanding of the network resource utilization for each multicast flow throughout its duration.

In accordance with an exemplary implementation of the exemplary embodiment of the invention, FIG. 5 shows exemplary functional blocks of a multicast-enabled router 106/110/108 employed in practicing the invention.

A messaging block 510 provides resource utilization and topology reporting functionality. Triggered by a reporting event or a received resource utilization update request, the messaging block 510 co-operates with a multicast traffic accounting manager 520 and a multicast topology discovery module 530 to obtain, encapsulate, and send resource utilization reports to a parent router 110/106 upstream along the multicast tree.

The invention is not limited to any particular messaging protocol; existing protocols, such as, but not limited to, Simple Object Access Protocol (SOAP) may easily be adapted for this purpose.

At each intermediary router 110, a topology discovery module 530 interfaces with processes implementing the multicast transport protocol to monitor local changes in the multicast tree topology. Signaling in respect of participation in multicast channel such as join requests and leave announcements are forwarded as trigger events to the multicast traffic accounting manager 520.

Each egress router 106, further employs a flow measurement module 550 to obtain traffic measurements (typically determining the number of: bytes transmitted, bytes dropped, transmitted packets, dropped packets) in respect of each interface in the multicast distribution list associated with a destination node 104. The invention is not intended to be limited to specific traffic measurement methods, exemplary methods of collecting the multicast traffic flow statistics such as, but not limited to: the Real Time Flow Meter (RTFM) an IETF standard, Internet Protocol Flow Information eXport (IPFIX) work in progress, a Netflow framework developed by Cisco Systems, Packet Sampling (PSAMP) initiative, Internet Protocol Performance Measurement (IPPM) initiative, etc. descriptions of which are published by the IETF.

The multicast traffic accounting manager block 520 configures the flow measurement module 550 to make resource utilization measurements on a per multicast flow basis. Resource utilization measurements may be stored in a local database 540. In accordance with the exemplary embodiment of the invention, stored resource utilization measurements are time stamped.

The multicast traffic accounting manager 520 aggregates the traffic measurements from all locally dependent branches of the multicast tree, and sends traffic measurement reports along with topology information upstream via the messaging module 510.

Via the messaging block 510, the multicast traffic accounting manager 520 communicates to child routers 110/108 requesting the topology and resource utilization updates. Received resource utilization updates and topology information regarding dependent sub-trees may be stored time stamped in the local database 540.

In accordance with an exemplary implementation of the exemplary embodiment of the invention, an exemplary data structure containing time stamped information regarding the dependent topology and multicast flow resource utilization information would have the following extensible Markup Language (XML) description:

```
 <MulticastFlowStats>
 <start_time> 2003-01-01 0:00 </start_time>
 <end_time> 2003-01-01 1:23 <lend_time>
 <node> I2
        <node> I4
                <node> D2 </node>
        </node>
        <node> I3
                <node> D3 </node>
                <node> D4 </node>
        </node>
 </node>
 <stats>
        <byte_count> 200345 </byte_count>
        <packet_count> 1027 </packet_count>
 </stats>
 </MulticastFlowStats>
```

the <node> topology construction shown in the above example is recursive in describing the multicast tree topology, as mentioned herein above, encapsulating dependent multicast tree topology information, and the exemplary resource utilization statistics shown relate only to aggregated content transport with out limiting the invention thereto. "D" nodes represent destination broadcast content consumer nodes 104, and "I" nodes represent intermediary routers 110.

The above exemplary topology and resource utilization report provided by 12, when taken in consideration along with the following exemplary subsequent topology and resource utilization report:

```
 <MulticastFlowStats>
 <start_time> 2003-01-01 1:23 </start_time>
 <end_time> 2003-01-01 1:25 </end_time>
 <node> I2
        <node> I4
                <node> D2 </node>
        </node>
        <node> I3
                <node> D3 </node>
                <node> D4 </node>
                <node> D5 </node>
        </node>
 </node>
 <stats>
        <byte_count> 20035 </byte_count>
        <packet_count> 107 </packet_count>
 </stats>
 </MulticastFlowStats>
```

shows that a multicast tree in respect of a multicast flow was set up at 0:00, 1027 packets were transmitted, and at 1:23, the destination node D5 joined the multicast tree as a child of the intermediary router I3, and another 107 packets were transmitted.

Suppose the intermediate router I2 (110) and destination node D1 (104) are child entities of an intermediate router I1(110). The topology and resource utilization measurements reported by I1 in respect of D1 for the duration of the multicast flow would be:

```
 <MulticastFlowStats>
 <start_time> 2003-01-010:00 </start_time>
 <end_time> 2003-01-01 1:25 </end_time>
 <node> D1
 </node>
 <stats>
        <byte_count> 220380 </byte_count>
        <packet_count> 1134 </packet_count>
 </stats>
 </MulticastFlowStats>
```

Then aggregate topology and resource utilization information reported by the intermediary router I1 (110) would be:

```
 <MulticastFlowStats>
 <start_time> 2003-01-01 0:00 </start_time>
 <end_time> 2003-01-01 1:23 </end-time>
 <node> I1
 <node> D2 </node>
 <node> I2
               <node> I4
                      <node> D2 </node>
               </node>
               <node> I3
                      <node> D3 </node>
                      <node> D4 </node>
              </node>
 </node>
 </node>
 <stats>
       <byte-count> 200345 </byte_count>
       <packet_count> 1027 </packet_count>
 </stats>
 </MulticastFlowStats>

 <MulticastFlowStats>
 <start_time> 2003-01-0 1:23 </start_time>
 <end_time> 2003-01-01 1:25 <lend_time>
 <node> I1
 <node> D2 </node>
 <node> I2
               <node> I4
                      <node> D2 </node>
               </node>
               <node> I3
                      <node> D3 </node>
                      <node> D4 </node>
                      <node> D5 </node>
               </node>
        </node>
 </node>
 <stats>
        <byte_count> 20035 </byte_count>
        <packet_count> 107 </packet_count>
 </stats>
 </MulticastFlowStats>
```

In accordance with another exemplary implementation of the invention, resource utilization measurements may be subjected to local processing in being reported. For example, the resource utilization measurements may be weighted before storage. Weighting may be dependent on cost values ascribed exemplary ascribed to: particular access links 114 to specific destination nodes 104, particular levels of service associated with conveying content to specific destination nodes 104, type of transport protocol employed over the access link 114 in servicing the destination node 114, the type of access infrastructure deployed to the destination node, etc. As another example, an offset may be applied to resource utilization measurements before storage. Applying an offset to resource utilization measurements provides means for implementing minimum billing or flat rate billing, and/or recovering specific costs associated with delivering multicast content to a destination node 104 connected beyond the egress router 108 via another intermediary communications network 124.

Different mathematical functions (min, max, sum, etc.) may be used for the resource utilization measurement aggregation at each multicast-enabled router 106/110/108 depending on the billing strategy implemented. Processing resource utilization measurements at the egress routers 108, and at the intermediary routers 110, distributes the associated computation overhead in the communication network 100 in support of scalable multicast flow accounting solutions.

It is pointed out that it is not necessary that all communications network nodes in a vendor heterogeneous communications network 100 support the exemplary embodiment of the invention for a satisfactory operation. The more multicast-enabled routers implementing the invention participate, the more an accurate the multicast flow accounting is provided. The flexibility provides an easy migration to compliant multicast-enabled equipment.

Non-compliant multicast-enabled routers forward resource utilization update requests to all interfaces in the multicast distribution list as any other packet associated with the multicast flow. However, in accordance with the exemplary embodiment of the invention, messages reporting resource utilization and topology information may be directed specifically to the ingress router 106 (S) as opposed to the upstream parent intermediary router 110. If the parent intermediary router 110 does not implement multicast flow accounting in accordance with the invention, although the parent intermediary router 110 does participate in provisioning multicast content transport and distribution, resource utilization and topology reporting messages directed to the ingress router 106 effectively pass through the non-participating intermediary router 110. Upstream compliant intermediary 110 or the ingress 106 router intercept and interpret the resource utilization and topology reporting messages received in respect of the multicast flow from any child participating router 110/108 whether immediately connected or indirectly connected thereto.

In accordance with an exemplary implementation of the exemplary embodiment of the invention, in providing means for interoperability, if the egress router forwarding multicast content to the destination node 104 is a non-participating multicast-enabled router, an upstream parent intermediary router 110 would need to shadow the egress router in obtaining traffic measurements. Incomplete information may therefore be available from the shadowing intermediary router 110, and reported resource utilization measurements may only be available on an aggregate basis for a number of destination nodes 104.

An upstream compliant router 106/110 may determine that a child router is a non-compliant router either from errors received in respect of resource utilization update report messages forwarded thereto, and/or subsequent to the expiration of a time-out period reserved in respect of waiting for the receipt of a resource utilization report. Therefore the shadowing intermediary router 110 behaves as an intermediary router 110 for the purpose of distributing multicast traffic and as an egress router 108 for the purpose of performing multicast flow measurements.

The embodiments presented are exemplary only and persons skilled in the art would appreciate that variations to the above described embodiments may be made. The scope of the invention is solely defined by the appended claims.

## Claims

1. A method of deriving resource utilization information regarding a multicast flow at a multicast-enabled router participating in a multicast tree, the method comprising the steps of :
a. detecting a triggering event including a reporting event or a received resource utilization update request;
b. obtaining topology information which is the topology of the downstream dependent sub-tree portions of the multicast tree;
c. aggregating traffic flow measurements regarding content conveyed in the dependent sub-tree portions of the multicast tree downstream of the router; and
d. reporting the topology information and traffic flow measurements upstream along the multicast tree through the use of resource utilization reports.

2. The method claimed in claim 1, further comprising a step of: correlating the topology information to the traffic flow measurements.

3. The method claimed in claim 1, wherein the reporting event comprises one of: a join request, a leave announcement, an announcement of an availability of a periodic traffic measurement, an announcement regarding a multicast tree topology changes, an announcement regarding a counter rollover, and a change content characteristics and the received resource utilization update request comprises one of: a resource utilization update request, a periodic resource utilization update request.

4. The method claimed in claim 1, wherein in respect of each triggering event, the method further comprises a step of: forwarding a resource utilization update request via an interface associated with each dependent sub-tree portion.

5. The method claimed in claim 4, further comprising a step of: receiving a resource utilization report via an interface associated with a dependent sub-tree portion.

6. The method claimed in claim 4, further comprising the steps of:
a. asserting the multicast-enabled router as an egress router in respect of the interface; and
b. obtaining a traffic flow measurement in respect of content conveyed via the interface.

7. The method as claimed in claim 6, wherein obtaining a traffic flow measurement, the method further comprises a step of: associating a time stamp with the traffic flow measurement.

8. The method claimed in claim 1, further comprising a step of: storing topology information and traffic flow measurement information in storage associated with the multicast-enabled router.

9. The method claimed in claim 8, wherein storing topology information and traffic flow measurement information, the method further comprises a step of: associating a time stamp with the stored topology information and traffic flow measurement information, enabling historical tracking of resource utilization information.

10. The method claimed in claim 1, further comprising steps of:
a. determining that multicast flow content is being forwarded via a local access link associated with a destination content consumer node;
b. asserting the multicast-enabled router as an egress router in respect of an interface corresponding to the local access link; and
c. obtaining a traffic flow measurement in respect of content conveyed via the interface.

11. The method claimed in claim 10, wherein the step of obtaining the traffic flow measurement is responsive to the triggering event.

12. The method claimed in claim 10, wherein obtaining the traffic flow measurement, the method further comprises a step of: associating a time stamp with the traffic flow measurement.

13. The method claimed in claim 10, further comprising a step of: storing traffic flow measurement information in storage associated with the egress router node.

14. The method claimed in claim 10, further comprising a step of: performing computations on traffic flow measurements providing distributed multicast flow report processing.

15. The method claimed in claim 1, further comprising steps of:
a. determining that multicast flow content is being received via a local access link associated with a source broadcast content provider node; and
b. asserting the multicast-enabled router as an ingress router in respect of an interface corresponding to the local access link.

16. The method claimed in claim 15, further comprising a step of: generating a resource utilization update request in respect of the multicast flow.

17. The method claimed in claim 15, further comprising a step of: forwarding the topology and traffic flow measurement information to a network management function.

18. The method claimed in claim 1, wherein reporting the topology and traffic flow measurement information upstream, the method further comprises a step of: encapsulating the topology and flow measurement information into a resource utilization report.

19. The method claimed in claim 18, further comprising a step of: directing the resource utilization report towards one of a next hop parent multicast-enabled router in the multicast tree, and an ingress router.

20. A multicast-enabled router providing support for multicast flow accounting, the multicast - enabled router comprising:
a. means for detecting a triggering event including a reporting event or a received resource utilization update request;
b. a multicast topology discovery module (530) for interfacing with processes implementing a multicast transport protocol to obtain topology information which is the topology of the downstream dependent sub-tree portions of a multicast tree in respect of a tracked multicast flow;
c. a messaging module (510) for conveying messages tracking resource utilization in respect of the multicast flow; and
d. a multicast traffic accounting manager module (520) for employing the messaging module (510) to request resource utilization updates from dependent sub-tree portions of the multicast tree, the multicast traffic accounting manager module (520) being adapted to:
i. correlate the topology information with traffic flow measurements provided thereto via resource utilization reports;
ii. aggregate the traffic flow measurements regarding content conveyed in the dependent sub-tree portions of the multicast tree downstream of the router; and
iii. report, via the messaging module (510), the topology information and traffic flow measurements upstream along the multicast tree through the use of resource utilization reports.

21. The multicast-enabled router claimed in claim 20, wherein the multicast-enabled router is associated with a local access link conveying content to a destination broadcast content consumer node, the multicast-enabled router further comprising: a flow measurement module (550) comprising a flow measurement means to obtain traffic flow measurements in respect of multicast flow content conveyed to the destination broadcast content consumer node.

22. The multicast-enabled router claimed in claim 21, wherein the flow measurement means is any of: Real Time Flow Meter (RTFM), Internet Protocol Flow Information eXport (IPFIX), Packet Sampling (PSAMP) and Internet Protocol Performance Measurement (IPPM).

23. The multicast-enabled router claimed in claim 20, wherein the multicast-enabled router is associated with a local access link receiving content from a source broadcast content provider node, the multicast traffic accounting manager module being adapted to employ the messaging module (510) to provide correlated resource utilization reports regarding the multicast tree to a management function.

24. The multicast-enabled router claimed in claim 23, the multicast traffic accounting manager module (520) being adapted to employ the messaging module (510) to issue a resource utilization update request subsequent to the occurrence of a triggering event.

25. The multicast-enabled router claimed in claim 24, wherein the reporting event comprises one of a: a join request, a leave announcement, an announcement of an availability of a periodic traffic measurement, an announcement regarding a multicast tree topology change, a counter rollover, and a change content characteristics and the received resource utilization update request comprises one of: a resource utilization update request, a periodic resource utilization update request.

26. The multicast-enabled router claimed in claim 20, further comprising a database (540) storing resource utilization information.

27. The multicast-enabled router claimed in claim 26, wherein the resource utilization information stored in the database (540) further comprises topology information regarding dependent sub-tree portions.

28. The multicast-enabled router claimed in claim 26, wherein the resource utilization information stored in the database (540) further comprises traffic flow measurements regarding dependent sub-tree portions.

29. The multicast-enabled router claimed in claim 26, wherein the resource utilization information stored in the database (540) further comprises correlated topology information regarding the multicast tree and traffic flow measurements regarding dependent sub-tree portions.

30. The multicast-enabled router claimed in claim 26, wherein the resource utilization information stored in the database (540) further comprises a time stamp.

## Patentansprüche

1. Verfahren für die Erlangung einer Ressourceneinsatzinformation in Zusammenhang mit einem mehrpunktartigen Fluss an einem mehrpunktartigen Router in einem mehrpunktartigen Baum, wobei das Verfahren die Schritte:
a. der Erfassung eines Auslösungsereignisses, das einen Meldungsereignis oder einen empfangenen Aktualisierungsantrag für einen Ressourceneinsatz enthält;
b. der Erlangung einer Topologieinformation, welche die Topologie der abhängigen Abwärtsunterbaumabschnitten des mehrpunktartigen Baum ist;
c. der Aggregation von Verkehrflussmaßen in Zusammenhang mit dem in den abhängigen Unterbaumabschnitten des mehrpunktartigen Baums unterhalb des Routers weitergeleiteten Inhalt; und
d. der Aufwärtsmeldung der Topologieinformation und der Verkehrflussmaßen längs des mehrpunktartigen Baums durch die Verwendung von Ressourceneinsatzmeldungen, aufweist.

2. Verfahren nach Anspruch 1, umfassend darüber hinaus einen Schritt der Korrelation der Topologieinformation mit den Verkehrflussmaßen.

3. Verfahren nach Anspruch 1, bei dem das Meldungsereignis ein Element unter einem Verbindungsantrag, einer Verlassenmitteilung, einer Mitteilung der Verfügbarkeit eines periodischen Verkehrmaßes, eine Mitteilung in Zusammenhang mit einer Änderung der Topologie des mehrpunkartigen Baums, einer Mitteilung in Zusammenhang mit einer Zählerinkrementierung, und einem Änderungsinhaltkennzeichnen aufweist, und der empfangene Aktualisierungsantrag für den Ressourceneinsatz ein Element unter einem Aktualisierungsantrag für den Ressourceneinsatz und einem periodischen Aktualisierungsantrag für einen Ressourceneinsatz umfasst.

4. Verfahren nach Anspruch 1, bei dem in Zusammenhang mit jedem Auslösungsereignis das Verfahren einen Schritt der Übertragung eines Aktualisierungsantrags für einen Ressourceneinsatz durch ein mit jedem abhängigen Unterbaumabschnitt assoziiertes Interface darüber hinaus aufweist.

5. Verfahren nach Anspruch 4, umfassend darüber hinaus einen Schritt des Empfangs einer Ressourceneinsatzmeldung durch ein mit einem abhängigen Unterbaumabschnitt assoziiertes Interface.

6. Verfahren nach Anspruch 4, umfassend darüber hinaus die Schritte:
a. der Erklärung, dass der mehrpunktartige Router ein Ausgangsrouter in Zusammengang mit dem Interface ist; und
b. die Erlangung eines Verkehrflussmaßes in Zusammengang mit dem durch das Interface weitergeleiteten Inhalt.

7. Verfahren nach Anspruch 6, bei dem bei der Erlangung eines Verkehrflussmaßes das Verfahren einen Schritt der Assoziierung eines Zeitstempels mit dem Verkehrflussmaß darüber hinaus aufweist.

8. Verfahren nach Anspruch 1, umfassend darüber hinaus einen Schritt der Speicherung der Topologieinformation und der Verkehrflussmaßinformation in einen mit dem mehrpunktartigen Router assoziierten Speicher.

9. Verfahren nach Anspruch 8, bei dem bei der Speicherung der Topologieinformation und der Verkehrflussmaßinformation das Verfahren einen Schritt der Assoziierung eines Zeitstempels mit der Topologieinformation und der Verkehrflussmaßinformation in dem Speicher und einen Erlaubnisschritt für die historische Weiterverfolgung der Ressourceneinsatzinformation darüber hinaus aufweist.

10. Verfahren nach Anspruch 1, umfassend darüber hinaus die Schritte:
a. der Bestimmung, dass der mehrpunktartige Flussinhalt durch eine örtliche, mit einer Inhaltbenutzerzielknoten assoziierte Zugangverbindung weitergeleitet wird;
b. der Erklärung, dass der mehrpunktartige Router ein Ausgangsrouter in Zusammengang mit einem dem örtlichen Zugangverbindung entsprechenden Interface ist; und
c. der Erlangung eines Verkehrflussmaßes in Zusammenhang mit dem durch das Interface weitergeleiteten Inhalt.

11. Verfahren nach Anspruch 10, bei dem der Erlangungsschritt für das Verkehrflussmaß empfindlich gegen das Auslösungsereignis ist.

12. Verfahren nach Anspruch 10, bei dem bei der Erlangung des Verkehrflussmaßes das Verfahren einen Schritt der Assoziierung eines Zeitstempels mit dem Verkehrflussmaß darüber hinaus umfasst.

13. Verfahren nach Anspruch 10, umfassend darüber hinaus einen Schritt der Speicherung der Verkehrflussmaßinformation in einen mit dem Ausgangsknoten des Routers assoziierten Speicher.

14. Verfahren nach Anspruch 10, umfassend darüber hinaus einen Schritt der Durchführung von Berechnungen auf Verkehrflussmaßen durch die Verarbeitung einer verteilten mehrpunktartigen Flussmeldung.

15. Verfahren nach Anspruch 1, umfassend darüber hinaus die Schritte:
a. der Bestimmung, dass der mehrpunktartige Flussinhalt durch eine örtliche, mit einer rundrufartigen (Broadcast) Inhaltanbieterquellknoten assoziierte Zugangverbindung empfangen wird;
b. der Erklärung, dass der mehrpunktartige Router ein Ausgangsrouter in Zusammengang mit einem dem örtlichen Zugangverbindung entsprechenden Interface ist.

16. Verfahren nach Anspruch 15, umfassend darüber hinaus einen Schritt der Erzeugung eines Aktualisierungsantrags für einen Ressourceneinsatz in Zusammenhang mit dem mehrpunktartigen Fluss.

17. Verfahren nach Anspruch 15, umfassend darüber hinaus einen Schritt der Weiterleitung der Topologieinformation und der Verkehrflussmaßinformation zu einer Netzwerkverwaltungsfunktion.

18. Verfahren nach Anspruch 1, bei dem bei der Aufwärtsmeldung der Topologieinformation und der Verkehrflussmaßinformation das Verfahren einen Schritt der Einkapselung der Topologieinformation und der Verkehrflussmaßinformation in eine Ressourceneinsatzmeldung darüber hinaus umfasst.

19. Verfahren nach Anspruch 18, umfassend darüber hinaus einen Schritt der Führung der Ressourceneinsatzmeldung zu einem Router unter einem nächsten mehrpunktartigen Hop-Parent-Router im mehrpunktartigen Baum und einem Eingangsrouter.

20. Mehrpunktartiger Router für die Bereitstellung eines Trägers für die mehrpunktartige Flussabrechnung, mit:
a. einem Mittel für die Erfassung eines Auslösungsereignis, das ein Meldungsereignis oder einen empfangenen Aktualisierungsantrag für einen Ressourceneinsatz enthält;
b. einem Entdeckungsmodul (530) für die mehrpunktartige Topologie für die Verbindung mit einen mehrpunktartigen Transportprotokoll implementierenden Prozessen zur Erlangung einer Topologieinformation, die die Topologie der abhängigen Abwärtsunterbaumabschnitten eines mehrpunktartigen Baums in Zusammenhang mit einem weiterverfolgten mehrpunktartigen Fluss ist;
c. einem Nachrichttransportmodul (510) für den Transport von Weiterverfolgungsnachrichten für einen Ressourceseinsatz in Zusammenhang mit dem mehrpunktartigen Fluss; und
d. einem Verwaltungsmodul (520) für die mehrpunktartige Verkehrabrechnung für die Verwendung eines Nachrichttransportmoduls (510) zum Antragen von Ressourceneinsatzaktualisierungen von abhängigen Unterbaumabschnitten des mehrpunktartigen Baums, wobei der Verwaltungsmodul (520) für die mehrpunktartige Verkehrabrechnung:
i. an die Korrelation der Topologieinformation mit durch Ressourcenseinsatzmeldungen bereitgestellten Verkehrflussmaßen;
ii. an die Aggregation von Verkehrflussmaßen in Zusammenhang mit dem in abhängigen Unterbaumabschnitten des mehrpunktartigen Baums unterhalb des Routers weitergeleiteten Inhalt; und
iii. an die Aufwärtsmeldung der Topologieinformation und der Verkehrflussmaßen durch den Nachrichttransportmodul (510) längs des mehrpunktartigen Baums durch die Verwendung von Ressourceneinsatzmeldungen angepasst ist.

21. Mehrpunktartiger Router nach Anspruch 20, bei dem der mehrpunktartiger Router mit einer örtlichen, einen Inhalt nach einem rundrufartigen Inhaltbenutzerzielknoten weiterleitenden Zugangsverbindung assoziiert ist, wobei der mehrpunktartige Router einen Flussmaßmodul (550) mit einem Flussmaßmittel zur Erlangung von Verkehrflussmaßen in Zusammenhang mit dem nach dem rundrufartigen Inhaltbenutzerzielknoten weiterleiteten mehrpunktartigen Flussinhalt darüber hinaus umfasst.

22. Mehrpunktartiger Router nach Anspruch 21, bei dem das Flussmaßmittel ein Element unter dem Real Time Flow Meter (RTFM), dem Internet Flow Information eXport (IPFIX), dem Packet Sampling (PSAMP) et dem Internet Protocol Performance Measurement (IPPM) ist.

23. Mehrpunktartiger Router nach Anspruch 20, bei dem der mehrpunktartige Router mit einem örtlichen Zugangsverbindung assoziiert wird, welche einen Inhalt von einem rundrufartigen Inhaltanbieterquellknoten empfängt, wobei der Verwaltungsmodul für die mehrpunktartige Verkehrabrechnung an die Verwendung des Nachrichttransportmoduls (510) zur Übertragung von korrelierten Ressourceneinsatzmeldungen in Zusammenhang mit dem mehrpunktartigen Baum zu einer Verwaltungsfunktion angepasst ist.

24. Mehrpunktartiger Router nach Anspruch 20, wobei der Verwaltungsmodul (520) für die mehrpunktartige Verkehrabrechnung an die Verwendung des Nachrichttransportmoduls (510) zur Übertragung eines Aktualisierungsantrags für einen Ressourceneinsatz im Anschluss an die Erscheinung eines Auslösungsereignisses angepasst ist.

25. Mehrpunktartiger Router nach Anspruch 24, bei dem das Meldungsereignis ein Element unter einem Verbindungsantrag, einer Verlassenmitteilung, einer Mitteilung der Verfügbarkeit eines periodischen Verkehrmaßes, einer Mitteilung in Zusammenhang mit einer Änderung der Topologie des mehrpunktartigen Baums, einer Mitteilung in Zusammenhang mit einer Zählerinkrementierung, und einem Änderungsinhaltkennzeichnen aufweist, und der empfangene Aktualisierungsantrag für einen Ressourceneinsatz ein Element unter einem Aktualisierungsantrag für einen Ressourceneinsatz und einem periodischen Aktualisierungsantrag für einen Ressourceneinsatz umfasst.

26. Mehrpunktartiger Router nach Anspruch 20, umfassend darüber hinaus eine Datenbank (540), in der Ressourcenseinsatzinformationen gespeichert sind.

27. Mehrpunktartiger Router nach Anspruch 26, bei dem die in der Datenbank (540) gespeicherte Ressourcenseinsatzinformation eine Topologieinformation in Zusammenhang mit abhängigen Unterbaumabschnitten darüber hinaus umfasst.

28. Mehrpunktartiger Router nach Anspruch 26, bei dem die in der Datenbank (540) gespeicherte Ressourcenseinsatzinformation Verkehrflussmaße in Zusammenhang mit abhängigen Unterbaumabschnitten darüber hinaus umfasst.

29. Mehrpunktartiger Router nach Anspruch 26, bei dem die in der Datenbank (540) gespeicherte Ressourcenseinsatzinformation eine korrelierte Topologieinformation in Zusammenhang mit dem mehrpunktartigen Baum und den Verkehrflussmaßen in Zusammenhang mit abhängigen Unterbaumabschnitten darüber hinaus umfasst.

30. Mehrpunktartiger Router nach Anspruch 26, bei dem die in der Datenbank (540) gespeicherte Ressourcenseinsatzinformation einen Zeitstempel darüber hinaus umfasst.

## Revendications

1. Procédé d'obtention d'une information d'utilisation de ressources relativement à un flux de type multipoint (Multicast) au niveau d'un routeur de type multipoint intégré dans une arborescence de type multipoint, le procédé comprenant les étapes :
a. de détection d'un événement de déclenchement qui inclut un événement de compte-rendu ou une requête d'actualisation d'utilisation de ressources reçue ;
b. d'obtention d'une information de topologie, laquelle est la topologie des portions sub-arborescentes dépendantes aval de l'arborescence de type multipoint ;
c. d'agrégation de mesures de flux de trafic relatives au contenu véhiculé dans les portions sub-arborescentes dépendantes de l'arborescence de type multipoint en aval du routeur ; et
d. de compte-rendu de l'information de topologie et des mesures de flux de trafic vers l'amont en suivant l'arborescence de type multipoint et en utilisant des comptes-rendus d'utilisation de ressources.

2. Procédé selon la revendication 1, comprenant en outre une étape de corrélation de l'information de topologie avec les mesures de flux de trafic.

3. Procédé selon la revendication 1, dans lequel l'événement de compte-rendu comprend un élément parmi : une requête de jonction, une annonce de sortie, une annonce de disponibilité d'une mesure de trafic périodique, une annonce relative à un changement de topologie de l'arborescence de type multipoint, une annonce relative à une incrémentation de compteur, et une caractéristique de contenu de changement, et la requête d'actualisation d'utilisation de ressources reçue comprend une requête parmi : une requête d'actualisation d'utilisation de ressources et une requête d'actualisation d'utilisation de ressources périodique.

4. Procédé selon la revendication 1, dans lequel, pour chaque événement de déclenchement, le procédé comprend en outre une étape de transmission d'une requête d'actualisation d'utilisation de ressources par le biais d'une interface associée à chaque portion sub-arborescente dépendante.

5. Procédé selon la revendication 4, comprenant en outre une étape de réception d'un compte-rendu d'utilisation de ressources par le biais d'une interface associée à une portion sub-arborescente dépendante.

6. Procédé selon la revendication 4, comprenant en outre les étapes:
a. de déclaration du routeur de type multipoint comme routeur de sortie relativement à l'interface; et
b. d'obtention d'une mesure de flux de trafic relativement au contenu véhiculé par le biais de l'interface.

7. Procédé selon la revendication 6, dans lequel lors de l'obtention d'une mesure de flux de trafic, le procédé comprend en outre une étape d'association d'un chronotimbre à la mesure de flux de trafic.

8. Procédé selon la revendication 1, comprenant en outre une étape de mémorisation de l'information de topologie et de l'information de mesure de flux de trafic dans une mémoire associée au routeur de type multipoint.

9. Procédé selon la revendication 8, dans lequel lors de la mémorisation de l'information de topologie et de l'information de mesure de flux de trafic, le procédé comprend en outre une étape d'association d'un chronotimbre à l'information de topologie et l'information de mesure de flux de trafic en mémoire et d'autorisation d'un suivi historique de l'information d'utilisation de ressources.

10. Procédé selon la revendication 1, comprenant en outre les étapes :
a. de détermination que le contenu de flux de type multipoint est en cours de transmission par le biais d'un lien d'accès local associé à un noeud cible d'utilisateur de contenu ;
b. de déclaration que le routeur de type multipoint est un routeur de sortie relativement à une interface correspondant au lien d'accès local ; et
c. d'obtention d'une mesure de flux de trafic relativement au contenu véhiculé par le biais de l'interface.

11. Procédé selon la revendication 10, dans lequel l'étape d'obtention de la mesure de flux de trafic est sensible à l'événement de déclenchement.

12. Procédé selon la revendication 10, dans lequel lors de l'obtention de la mesure de flux de trafic, le procédé comprend en outre une étape d'association d'un chronotimbre à la mesure de flux de trafic.

13. Procédé selon la revendication 10, comprenant en outre une étape de mémorisation de l'information de mesure de flux de trafic dans une mémoire associée au noeud de sortie du routeur.

14. Procédé selon la revendication 10, comprenant en outre une étape d'exécution de calculs sur des mesures de flux de trafic en traitant un compte-rendu de flux de type multipoint distribué.

15. Procédé selon la revendication 1, comprenant en outre les étapes :
a. de détermination que le contenu de flux de type multipoint est en cours de réception par le biais d'une liaison d'accès local associée à un noeud source de prestataire de contenu de type diffusion (Broadcast) ; et
b. de déclaration que le routeur de type multipoint est un routeur d'entrée relativement à une interface correspondant au lien d'accès local.

16. Procédé selon la revendication 15, comprenant en outre une étape de génération d'une requête d'actualisation d'utilisation de ressources relativement au flux de type multipoint.

17. Procédé selon la revendication 15, comprenant en outre une étape de transmission de l'information de topologie et de l'information de mesure de flux de trafic à une fonction de gestion de réseau.

18. Procédé selon la revendication 1, dans lequel lors du compte-rendu de l'information de topologie et de l'information de mesure de flux de trafic vers l'amont, le procédé comprend en outre une étape d'encapsulation de l'information de topologie et de l'information de mesure de flux de trafic dans un compte-rendu d'utilisation de ressources.

19. Procédé selon la revendication 18, comprenant en outre une étape de direction du compte-rendu d'utilisation ressources vers un routeur parmi un routeur hop parent suivant de type multipoint dans l'arborescence de type multipoint et un routeur d'entrée.

20. Routeur de type multipoint fournissant un support permettant la comptabilisation de flux de type multipoint, le routeur de type multipoint comprenant :
a. un moyen de détection d'un événement de déclenchement incluant un événement de compte-rendu ou une requête d'actualisation d'utilisation de ressources reçue ;
b. un module de découverte de topologie de type multipoint (530) destiné à se connecter à des processus implémentant un protocole de transport de type multipoint pour obtenir une information de topologie qui est la topologie des portions sub-arborescentes dépendantes aval d'une arborescence de type multipoint relativement à un flux suivi de type multipoint ;
c. un module de messagerie (510) destiné à véhiculer des messages de suivi d'utilisation de ressources relativement au flux de type multipoint ; et
d. un module de gestion de comptabilisation de trafic de type multipoint (520) destiné à employer le module de messagerie (510) pour demander des actualisations d'utilisation de ressources provenant de portions sub-arborescentes dépendantes de l'arborescence de type multipoint, le module de gestion de comptabilisation de trafic de type multipoint (520) étant adapté pour :
i. corréler l'information de topologie avec des mesures de flux de trafic fournies par le biais de comptes-rendus d'utilisation de ressources ;
ii. agréger des mesures de flux de trafic relativement au contenu véhiculé dans les portions sub-arborescentes dépendantes de l'arborescence de type multipoint en aval du routeur ; et
iii. faire le compte-rendu, par le biais du module de messagerie (510), de l'information de topologie et des mesures de flux de trafic en amont en suivant l'arborescence de type multipoint et en utilisant des comptes-rendus d'utilisation de ressources.

21. Routeur de type multipoint selon la revendication 20, dans lequel le routeur de type multipoint est associé à un lien d'accès local véhiculant un contenu vers un noeud cible d'utilisateur de contenu de type diffusion, le routeur de type multipoint comprenant en outre : un module de mesure de flux (550) comprenant un moyen de mesure de flux pour obtenir des mesures de flux de trafic relativement au contenu de flux de type multipoint véhiculé vers le noeud cible d'utilisateur de contenu de type diffusion.

22. Routeur de type multipoint selon la revendication 21, dans lequel le moyen de mesure de flux est l'un quelconque parmi : le Real Time Flow Meter (RTFM), l'Internet Flow Information eXport (IPFIX), le Packet Sampling (PSAMP) et l'Internet Protocol Performance Measurement (IPPM).

23. Routeur de type multipoint selon la revendication 20, dans lequel le routeur de type multipoint est associé à un lien d'accès local recevant un contenu d'un noeud source de prestataire de contenu de type diffusion, le module de gestion de comptabilisation de trafic de type multipoint étant adapté pour employer le module de messagerie (510) afin de délivrer à une fonction de gestion des comptes-rendus d'utilisation de ressources corrélés relativement à l'arborescence de type multipoint.

24. Routeur de type multipoint selon la revendication 23, le module de gestion de comptabilisation de trafic de type multipoint (520) étant adapté pour employer le module de messagerie (510) afin de délivrer une requête d'actualisation d'utilisation de ressources générée à la suite de l'apparition d'un événement de déclenchement.

25. Routeur de type multipoint selon la revendication 24, dans lequel l'événement de compte-rendu comprend un élément parmi : une requête de jonction, une annonce de sortie, une annonce de disponibilité d'une mesure de trafic périodique, une annonce relative à un changement de topologie de l'arborescence de type multipoint, une annonce relative à une incrémentation de compteur, et une caractéristique de contenu de changement, et la requête d'actualisation d'utilisation de ressources reçue comprend une requête parmi : une requête d'actualisation d'utilisation de ressources et une requête d'actualisation d'utilisation de ressources périodique.

26. Routeur de type multipoint selon la revendication 20, comprenant en outre une base de données (540) dans laquelle sont mémorisée des informations d'utilisation de ressources.

27. Routeur de type multipoint selon la revendication 26, dans lequel l'information d'utilisation de ressources mémorisée dans la base de données (540) comprend en outre une information de topologie relativement à des portions sub-arborescentes dépendantes.

28. Routeur de type multipoint selon la revendication 26, dans lequel l'information d'utilisation de ressources mémorisées dans la base de données (540) comprend en outre des mesures de flux de trafic relativement à des portions sub-arborescentes dépendantes.

29. Routeur de type multipoint selon la revendication 26, dans lequel l'information d'utilisation de ressources mémorisée dans la base de données (540) comprend en outre une information de topologie corrélée relativement à l'arborescence de type multipoint et à des mesures de flux de trafic relativement à des portions sub-arborescentes dépendantes.

30. Routeur de type multipoint selon la revendication 26, dans lequel l'information d'utilisation de ressources mémorisée dans la base de données (540) comprend en outre un chronotimbre.
